# EUROPEAN PATENT APPLICATION

(11) **EP 1 956 820 A2**
(43) Date of publication of application: **13.08.2008**
(21) Application number: 07123931.3
(22) Date of filing: 21.12.2007
(51) Int. Cl.: H04N 1/00

(54) **Image forming apparatus**

(30) Priority: 08.02.2007 KR 20070013212
(71) Applicant: Samsung Electronics Co., Ltd, Suwon-si, Gyeonggi-do 442-742 (KR)
(72) Inventor: Cho, Won Il, Bungdan-gu, Seongnam-si, Gyeonggi-do (KR)
(74) Representative: Hewett, Jonathan Michael Richard

(57) **Abstract**

An image forming apparatus which includes a viewer program so as to directly print printing data stored in an external digital storage medium without using a host computer and a method of controlling the same. The image forming apparatus includes a connection interface unit to receive printing data from an external digital storage medium, a storage unit to store a viewer program to view the contents of the printing data, and a control unit to control the received printing data to be displayed on a predetermined screen display unit via the viewer program and to control the displayed printing data to be printed.

## Description

The present general inventive concept relates to an image forming apparatus, and more particularly to an image forming apparatus which includes a viewer program so as to directly print printing data stored in an external digital storage medium without using a host computer and a method of controlling the same.

Generally, an image forming apparatus serves to convert a document written by an application program, or an image photographed by a digital camera, into encoded data and then outputs the data onto a printable medium so as to make the document or the photographed image visible to a user.

Recently, digital products or digital peripherals, such as universal serial bus (USB) memories (flash memory devices), MP3 players, or digital cameras, are widely used as external digital storage media to store or to reproduce data in or from the digital products or digital peripherals.

Hereinafter, a conventional printing system to print a document stored in an external digital storage medium will be described.

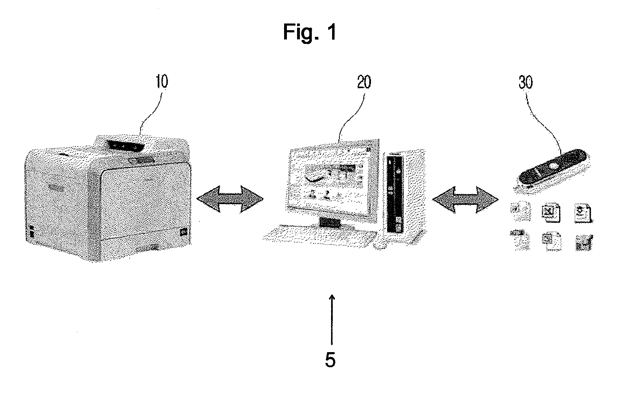

Figure 1 illustrates a conventional printing system 5 used to print a document stored in an external digital storage medium. As illustrated in Figure 1, in order to output a document from image forming apparatus 10 (formatted for example as a, Word, Excel, Power Point, Hangul, PDF, or Hunmin Jeongeum document) stored in an external digital storage medium 30, the external digital storage medium 30 is connected to a host computer 20. A dedicated program or a viewer program for the document is executed by host computer 20 to open the document, and the host computer 20 transmits an execution command to the image forming apparatus 10 which is connected to host computer 20, thereby outputting the document. However, when the document stored in the external digital storage medium 30 is printed, the dedicated program or the viewer program, which is stored in the host computer 20, must be used in order to output the document. Accordingly, when the host computer 20 is not connected to image forming apparatus 10 or to external digital storage medium 30, or is inoperable, the document cannot be outputted from image forming apparatus 10.

The present general inventive concept provides an image forming apparatus which includes a viewer program so as to directly print printing data stored in an external digital storage medium without using a host computer such that it is possible to provide convenience to a user, and a method of controlling the same.

The foregoing and/or other aspects and utilities of the present general inventive concept may be achieved by providing an image forming apparatus including a connection interface unit to receive printing data from an external digital storage medium, a storage unit to store a viewer program to view the contents of the printing data, and a control unit to control the received printing data and to display the printing data on a screen display unit via the stored viewer program.
The image forming apparatus may include an operation panel which receives a command signal input by a user.

The control unit may control a list of received printing data to be displayed on the screen display unit.

The operation panel may receive a command signal input by the user to select from a list one of the received printing data.

The operation panel may receive a command signal to edit the displayed printing data and the control unit may control the displayed printing data to be edited using the received command signal.

The control unit may control the viewer program wherein the viewer program is displayed on the screen display unit.

The external digital storage medium may be a portable storage medium.
The screen display unit may be included in the operation panel.

The foregoing and/or other aspects and utilities of the present general inventive concept may be achieved by providing a method of controlling an image forming apparatus which has a viewer program including receiving printing data from an external digital storage medium connected to the image forming apparatus, displaying the received printing data on a screen display unit via the viewer program, and printing the displayed printing data.

The method may further include displaying a list of received printing data on the screen display unit.

The displaying of the received printing data may include receiving a command signal to select from the list of the displayed printing data and to display the selected displayed printing data on the screen display unit via the viewer program after the displaying of the list of received printing data.

The method may further include receiving from a user a command signal to edit the printing data and to edit the displayed printing data using the received command signal after the displaying of the received printing data.

The command signal may be a signal to edit the printing data and includes a font change and/or bookmark insertion function.

The foregoing and/or other aspects and utilities of the present general inventive concept may be achieved by providing an image forming apparatus including a connection interface unit to receive printing data representing an image from an external digital storage medium and to receive a command from a user, a storage unit connected to the connection interface unit to store a viewer program to format the printing data, and a control unit connected to the connection interface unit and the storage unit to control the display and the printing of the image.

These and/or other aspects and utilities of the present general inventive concept will become apparent and more readily appreciated from the following description of the embodiments, taken in conjunction with the accompanying drawings of which:
Figure 1 illustrates the configuration of a conventional printing system to print a document stored in an external digital storage medium;
Figure 2 illustrates the configuration of a printing system to print a document stored in an external digital storage medium according to an embodiment of the present general inventive concept;
Figure 3 is a block diagram that illustrates an image forming apparatus illustrated in Figure 2 that includes a viewer program; and
Figure 4 is a flowchart that illustrates a method of controlling the image forming apparatus including the viewer program according to an embodiment of the present general inventive concept.

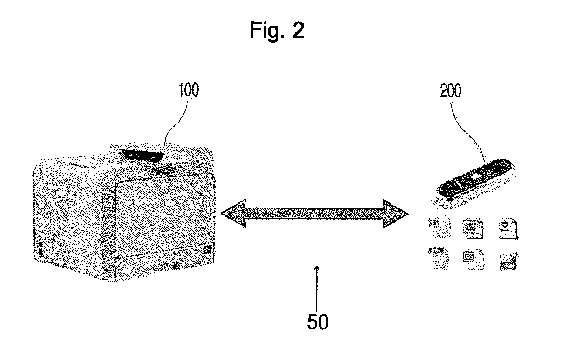

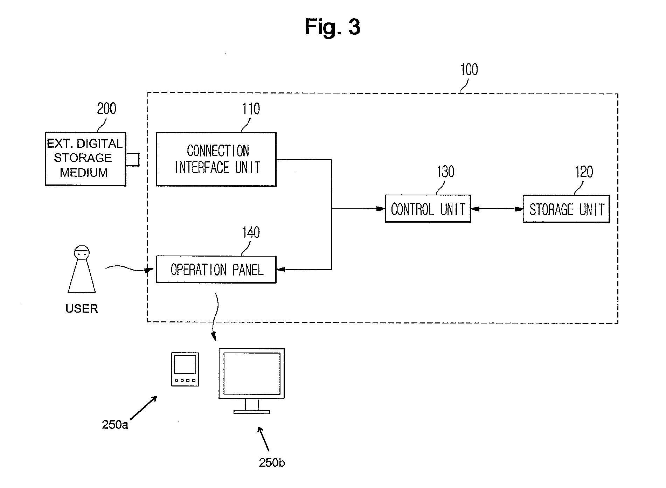

Figure 2 illustrates the configuration of a printing system 50 to print a document stored in an external digital storage medium 200 according to an embodiment of the present general inventive concept, and Figure 3 is a block diagram that functionally illustrates an image forming apparatus 100 of Figure 2 that has a viewer program. The image forming apparatus 100 having the viewer program includes a connection interface unit 110, a storage unit 120, and a control unit 130.

In operation, first the connection interface unit 110 receives printing data from the external digital storage medium 200 which is connected to the image forming apparatus 100.

In one example, the connection interface unit 110 is a universal serial bus (USB) port which is connected to the external digital storage medium 200, such as a USB flash memory device, and receives the printing data stored in the external digital storage medium 200.

The external digital storage medium 200 may be a mobile storage medium which is easily transported by a user.

Next, the storage unit 120 stores the viewer program to enable viewing of the contents of the printing data to be printed.

The storage unit 120 may be a predetermined storage medium to store the viewer program, such as a DRAM, a SDRAM, a RDRAM, a DDRAM or a SRAM storage medium.

The viewer is a software program to display a specific file to be printed and is utilized to view the contents of a dynamic image file or an image file manufactured commercially.

In general, the viewer program is utilized to display a specific file and includes an acrobat reader for a PDF file or a graphic viewer program called "ACDSee" for an image file such as a JPEG or GIF file.

Accordingly, the storage unit 120 stores a plurality of viewer programs in order to be able to check the contents of printing data having a variety of formats, such as Word, Excel, Power Point, Hangul, PDF, or Hunmin Jeongeum.

The viewer program, according to an embodiment of the present general inventive concept, supports an editing function including font change or bookmark insertion. The viewer program further includes a function to print all or a portion of the printing data, a function to select the number of copies to be made, and a function to select a single-sided or a double-side printed page.

The above-described functions of the view program will be described in more detail below.

Next, the control unit 130 controls the received printing data to be displayed on a predetermined screen display unit 250a and/or 250b (refer to Figure 3) through the viewer and controls the displayed printing data to be printed.

More particularly, the control unit 130 controls the printing data transmitted from the connection interface unit 110 to be displayed on the predetermined screen display unit 250a and/or 250b via the viewer program when a user inputs a command signal on operation panel 140 to display the printing data on the predetermined display unit 250a and/or 250b.

Here, the predetermined screen display unit 250a and/or 250b displays the printing data transmitted from the connection interface unit 110 and either or both may be a liquid crystal display (LCD), a plasma display panel (PDP), a TFT display, an organic electroluminescence (EL) display, or a cathode ray tube (CRT) display device. In an example in the present general inventive concept, the predetermined screen display unit 250a and/or 250b is a graphic LCD unit included in the image display apparatus 100 which includes the viewer program.

The image forming apparatus 100, which includes the viewer program, further includes the operation panel 140 to receive a command signal from the user.
The operation panel 140 includes the predetermined screen display unit 250a and/or 250b to display the printing data and includes a plurality of buttons and/or a touch screen to allow a user to operate the image forming apparatus 100 by inputting at least one command.

That is, a print command signal to print the printing data is inputted by a user through a button or touch screen included in the operation panel unit 140 and a command signal to edit the printing data is inputted by the user selecting an editing menu button or function.

The control unit 130 controls a list of transmitted printing data to be displayed on the predetermined screen display unit 250a and/or 250b.

That is, when a plurality of printing data are stored in the external digital storage medium 200, the list of printing data is displayed on the predetermined screen display unit 250a and/or 250b such that the command signal to select one of the displayed printing data is inputted by the user through the operation panel 140.

The control unit 140 controls the stored viewer program to be displayed on the predetermined screen display unit 250a and/or 250b.

For example, a plurality of viewer programs stored in the storage unit 120 of the image forming apparatus 100, such as Word, Excel, or Hunmin Jeongeum, may be displayed on the predetermined screen display unit 250a and/or 250b such that the list of viewer programs stored in the storage unit 120 can be easily seen. When a viewer program corresponding to the printing data is not included, the image forming apparatus 100 can be updated such that the necessary viewer program is added by downloading the necessary viewer program from a source.

Next, the function to edit the printing data stored in the external digital storage medium 200 using the viewer program to support the editing function, including a font change or bookmark insertion, will be described.

First, a command signal to edit the printing data is received through the operation panel 140.

In more detail, the user views the contents of the printing data displayed on the predetermined screen display unit 250a and/or 250b and selects an edit menu included in the operation panel 140 when the editing function, including a font change or bookmark insertion, is necessary.

When the user wants to edit the printing data and inputs an editing command signal through the operation panel 140, the control unit 130 controls the displayed printing data to be edited using the inputted editing command signal.

The size or color of the font of the printing data can be controlled using the editing command signal. All or a portion of printing data can be printed, the number of copies can be selected, and/or a single-sided or double-sided printed page can be selected by the user using an output menu included in the operation panel 140. Hereinafter, a method of controlling the image forming apparatus 100, which includes the viewer program, will be described.

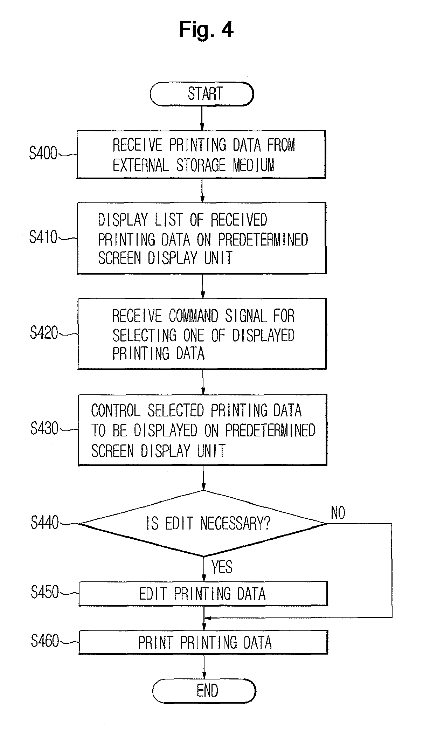

Figure 4 is a flowchart that illustrates a method of controlling the image forming apparatus 100 which includes the viewer program according to an embodiment of the present general inventive concept. As illustrated in Figure 4, at S400 printing data is received from an external digital storage medium 200.

At S410 a list of received printing data is displayed on the predetermined screen display unit 250a and/or 250b, and a command signal to select one of the displayed printing data is received from the user at S420.

At S430 the selected printing data is controlled to be displayed on the predetermined screen display unit 250a and/or 250b through the viewer program stored previously in storage unit 120.

At S440 it is determined whether the printing data needs to be edited, and if so at S450 a command signal to edit the printing data is received and the printing data is edited, and the edited printing data is then printed at S460. If the printing data does not need to be edited, then the printing data is received to be printed at S460 without having been edited at S450.

As described above, in an image forming apparatus 100 which includes a viewer program and a method of controlling the same according to the present general inventive concept, the image forming apparatus 100 can print printing data stored in an external digital storage medium 200 without using a host computer 20 (refer to Figure 1). This provides convenience to a user.

In addition, since an editing function is provided through the viewer program included in the image forming apparatus 100, it is possible to edit the printing data as necessary without use of a host computer 20.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. An image forming apparatus comprising:
a connection interface unit to receive data from an external digital storage medium;
a storage unit arranged to store a program enabling the data to be viewed; and
a control unit to control the received data and to display the data on a display via the stored program.

2. The image forming apparatus of claim 1, further comprising:
an operation panel to receive a command signal input by a user.

3. The image forming apparatus of claim 2, wherein the control unit controls a list of received printing data to be displayed on the display.

4. The image forming apparatus of claim 3, wherein the operation panel receives the command signal input by the user to select from the list one of the received printing data.

5. The image forming apparatus of claim 2, wherein the operation panel receives the command signal to edit the printing data and the control unit controls the displayed printing data to be edited using the received command signal.

6. The image forming apparatus of claim 1, wherein the control unit controls an interface of the viewer program to be is displayed on a display.

7. The image forming apparatus according to claim 1, wherein the external digital storage medium is a portable storage medium.

8. The image forming apparatus according to claim 2, wherein a display is included in the operation panel.

9. A method of controlling an image forming apparatus which includes a program enabling data to be viewed, comprising:
receiving data from an external digital storage medium connected to the image forming apparatus;
displaying the received data on a display via the viewer program; and
printing the displayed printing data.

10. The method of claim 9, further comprising:
displaying a list of received printing data on the display.

11. The method of claim 10, wherein the displaying of the received printing data includes receiving a command signal to select from the list of the displayed printing data and to display the selected displayed printing data on the display via the viewer program after the displaying of the list of received printing data.

12. The method of claim 9, further comprising:
receiving from a user a command signal to edit the printing data and to edit the displayed printing data using the received command signal after the displaying of the received printing data.

13. The method of claim 12, wherein the command signal is a signal to edit the printing data and includes a font change and/or bookmark insertion function.

14. A computer program, which when executed by a processor, is arranged to control an image-processing apparatus according to the method of any one of claims 9 to 13.

15. An image forming apparatus, comprising:
a connection interface unit to receive data representing an image from an external digital storage medium;
a storage unit connected to the connection interface unit to store a program for formatting the data for printing; and
a control unit connected to the connection interface unit and the storage unit to control the display and the printing of the image.
